# EUROPÄISCHE PATENTSCHRIFT

(11) **EP 2 762 987 B1**
(45) Veröffentlichungstag und Bekanntmachung des Hinweises auf die Patenterteilung: **07.08.2019**
(21) Anmeldenummer: 14152803.4
(22) Anmeldetag: 28.01.2014
(51) Int. Cl.: G05B 19/404, B30B 15/28

(54) **Verfahren zur Steigerung der Ausfallsicherheit einer Vorschubachse und Achsansteuerungseinrichtung**
Method for increasing the fail safety of a feed axle and axle control device
Procédé d'augmentation de la sécurité de fonctionnement d'un axe d'avance et dispositif de commande d'axe

(30) Priorität: 04.02.2013 DE 102013201751
(43) Veröffentlichungstag der Anmeldung: 06.08.2014
(73) Patentinhaber: Otto Bihler Handels-Beteiligungs-GmbH, 87642 Halblech (DE)
(72) Erfinder: Muche, Norbert, 87669 Rieden am Forggensee (DE)
(74) Vertreter: Weickmann & Weickmann PartmbB

(56) Entgegenhaltungen:
- DE-A1-102005 040 263
- JP-B2- 3 818 958
- JP-B2- 3 933 532
- US-A- 4 933 800

## Beschreibung

Diese Erfindung betrifft ein Verfahren zur Steigerung der Ausfallsicherheit einer elektrisch angetriebenen Vorschubachse mit einer Achsansteuerungseinrichtung und einer Lasterfassung während eines Einrichtvorgangs sowie eine Achsansteuerungseinrichtung.

Mit einer elektrisch angetriebenen Vorschubachse ist in dieser Patentanmeldung ein physisch realer Beweger gemeint, der eine lineare Vorschubbewegung ausführen kann, unter Umständen jedoch auch eine Drehung oder eine Bewegung entlang einer anderen Bahn ausführen kann. Eine solche Vorschubachse kann in einer Vielzahl von Anwendungen eingesetzt werden, beispielsweise zum Positionieren oder um Kräfte auf Werkstücke auszuüben, um diese zu bearbeiten. Dies kann beispielsweise beim Stanzen oder Pressen der Fall sein. Insbesondere beim Pressen oder Biegen oder dergleichen wird jedoch, um eine bestimmte Umformung eines Werkstücks zu erreichen, die Ansteuerung einer Vorschubachse wie bei einer Positionierung vorgesehen, um die Achse an der gewünschten Position anzuhalten. Bei kraftgesteuertem Anhalten der Achse könnte die genaue Position des Anhaltens nicht sicher eingehalten werden, da die Position bei einer vordefinierten Kraft z.B. von Werkstoffeigenschaften eines Werkstücks und von Temperatureffekten abhängen kann, welche unter Umständen erheblich variieren können.

Vor der Aufnahme einer Produktion wird eine Produktionsmaschine, wie etwa ein Stanz-Biegeautomat, üblicherweise eingerichtet. Bei einem solchen Einrichtvorgang wird im Allgemeinen die Maschine im Handbetrieb geführt, wobei die späteren Produktionsschritte in langsamer Geschwindigkeit abgearbeitet werden. Dabei können auch Mustererzeugnisse produziert werden, anhand derer beurteilt wird, ob die Maschine die gewünschte Qualität liefert. Ist dies nicht der Fall, so wird die Maschine entsprechend nachjustiert. Bei vielen Maschinen ist zum probeweisen, langsamen Durchlaufen der Produktionsvorgänge ein Handrad oder ein Taster vorgesehen, mit denen eine Position der Maschine in einigen oder allen Zeitpunkten eines Produktionszyklusses eingestellt werden kann. Diese Positionen können durch die Handsteuerung lange aufrechterhalten bleiben. Insbesondere wird beim Einrichten auch geprüft, ob Maschinenteile unzulässig kollidieren.

Bei einem positionsgesteuerten Betrieb einer Vorschubachse kann es zu Situationen kommen, in denen es beim Anfahren einer Sollposition zu einer mechanischen Blockierung kommt. Beispielsweise kann dies vorkommen, wenn die Werkzeuge einer Presse, Montagewerkzeuge oder dergleichen gegeneinander gefahren werden. Liegt die Sollposition eines Werkzeugs im Inneren des Werkstücks oder gar des Gegenwerkzeugs, so steuert eine Regelung, die versucht, diese Position zu erreichen, üblicherweise den Antrieb nach kurzer Zeit auf Volllast. Dadurch werden die Kräfte der Achse in deren Stillstand maximiert, was bei Elektromotoren aufgrund der fehlenden Gegeninduktion üblicherweise zu maximalem Stromfluss führt. Typischerweise liegt der maximale Stromfluss etwa Faktor drei über einem maximal für statische Dauermomente zulässigen Strom. Ein vollständig in Wärme umgewandelter Maximalstrom lässt die Temperatur der Induktionsspulen in dem Elektromotor schnell über eine zulässige Temperaturgrenze ansteigen. Dies kann zur Beschädigung oder Zerstörung des Elektromotors oder zum Abschalten der Stromversorgung führen. Jedenfalls besteht erhebliche Gefahr, dass die Achse ausfällt und sich ein beabsichtigter Vorgang, etwa das Einrichten, und damit die nachfolgende Produktion verzögert. Typische Situationen, in denen es zu dem beschriebenen Verhalten kommen kann, sind etwa eine Verstellung einer Sollposition per Handbetrieb auf eine nicht erreichbare Position oder eine Position, in der im Produktionsbetrieb nur sehr kurz Maximallast der Vorschubachse auftreten würde. Ein Verharren in dieser Position kann zur Überhitzung des Motors führen. Die Überlast bei Stillstand kann auch durch Fehler an der Maschine oder deren Steuerung auftreten, beispielsweise durch noch mangelhafte Werkzeugeinstellung, andere Werkzeuge an der Vorschubachse als die, zu denen in der Achsansteuerungseinrichtung die Positions- und Abmessungsdaten vorliegen, Fehler bei der Konfigurierung eines Prozesses oder dergleichen mehr.

US 4 933 800 A offenbart ein Verfahren in dem ein elektrischer Motor bei Überlast gestoppt und zurückgefahren wird, um die Last zu verringern. Das Verfahren wird z.B. bei Bohr- oder Press-Anwendungen angewandt.

JP 3 818958 B2 und JP 3 933532 B2 offenbaren ein Verfahren zum Überlastschutz einer elektrischen Presse, indem der elektrische Strom gemessen wird.

DE 10 2005 040263 A1 offenbart ein Verfahren zur Steuerung und Regelung der Stößelbewegung an servo-elektrischen Pressen , in dem die Stößelbewegung je nach Betriebsart die Bewegungsphasen des Stößels einerseits über elektronische Positions-Kurvenscheiben und andererseits über eine Kraftregelung oder Kraftbegrenzung steuerbar sind.

Aufgabe der vorliegenden Erfindung ist es, eine Regelungsstrategie anzugeben, mit der der Ausfall einer numerisch gesteuerten Achse auch unter den genannten Bedingungen vermieden werden kann.

Die Aufgabe wird durch ein Verfahren gemäß Anspruch 1 und eine Achsansteuerungseinrichtung gemäß Anspruch 7 gelöst.

Insbesondere nimmt die Achsansteuerungseinrichtung bei Überlast eine Lagekorrektur der Sollposition vor, um die Last der Vorschubachse zu verringern.

Eine Lasterfassung kann beispielsweise eine Temperaturmessung in der Vorschubachse, insbesondere an einer Motorwicklung eines Elektromotors der Vorschubachse, oder eine Kraft- oder Drehmomentmessung sein, die von der Vorschubachse bewirkte Kräfte oder Drehmomente ermittelt. Alternativ oder zusätzlich können elektrische Ansteuerparameter für den Elektromotor als Maß für die Last herangezogen werden, insbesondere ein an einer Motorwicklung anliegender Strom oder eine Spannung über eine Motorwicklung oder deren Verhältnis, also etwa eine Impedanz oder ein Wirkwiderstand. Diese elektrischen Parameter können gemessen oder aus Daten oder einer elektrischen Größe oder dem Vorliegen eines bestimmten Betriebszustands, zum Beispiel Maximallast, in der Achsansteuerungseinrichtung gewonnen werden. In einer Weiterbildung des Verfahrens wird eine Berechnung einer für die Lasterfassung geeigneten Größe aus mehreren der genannten Parameter durchgeführt. Außerdem kann die Zeitdauer des Vorliegens einer Überlast beim Auslösen der Lagekorrektur der Sollposition berücksichtigt werden.

Um die Verringerung der Last der Vorschubachse zu erreichen, wird die Sollposition vorzugsweise in Gegenrichtung zu der Richtung korrigiert, in die eine Positionierung der Vorschubachse vorgenommen wurde, als eine Überlast aufgetreten ist. Dies bedeutet, dass eine Bearbeitungsposition, in der hohe Kräfte benötigt werden, oder eine Kollision von Elementen, die durch einen Positionierversuch der Vorschubachse ausgelöst wurde, oder eine zu starke Verformung von Werkstücken oder dergleichen zumindest teilweise rückgängig gemacht wird. Die Kollisions- oder Produktionskräfte sinken durch das Abnehmen der Verformung, wenn die Sollposition auf eine Position entgegen der Kollisions- oder Produktionsrichtung korrigiert wird und anschließend deren Anfahren bewirkt wird. Dadurch sinkt die Last der Vorschubachse, und dementsprechend auch der Strom bzw. die Spannung durch bzw. an deren Motorwicklung, woraus ein geringerer Wärmeeintrag in die Vorschubachse, insbesondere in deren Motorwicklung, folgt. Dadurch kann nach einem oder mehreren solchen Vorgängen die Überlast beseitigt sein. Bevorzugt wird das Einrichten von der auf diese Weise erreichten Position aus fortgesetzt, ohne an einem möglicherweise vorgegebenen restlichen Ablauf des Einrichtens etwas zu ändern.

In einer Ausführungsform des vorbeschriebenen Verfahrens nimmt die Achsansteuerungseinrichtung die Lagekorrektur der Sollpositionen vor, wenn eine Temperatur in der Vorschubachse, ein Strom durch eine Motorwicklung der Vorschubachse, eine Spannung über eine Motorwicklung der Vorschubachse oder eine Kraft oder ein Drehmoment, die jeweils von der Vorschubachse bewirkt werden, über einen vordefinierten Grenzwert steigt. Dementsprechend liegt bei den genannten Bedingungen eine Überlast vor. Welcher der Parameter zur Auslösung einer Korrektur der Sollposition herangezogen wird, hängt von der Art der Motorsteuerung und den verfügbaren Informationen über die genannten Größen ab. Bei der Verwendung einer unzulässig hohen Temperatur als Parameter für die Auslösung einer Lagekorrektur der Sollposition wird vorzugsweise berücksichtigt, dass eine Auswirkung einer Laständerung in der Vorschubachse auf die gemessene Temperatur eine Zeitkonstante hat, die üblicherweise deutlich über der Ausführungszeit einer Korrektur liegt. Daher kann bis zu einer Entscheidung über eine weitere Korrektur in der neuen Sollposition und bei entsprechend verringerter Last eine Wartezeit bis zu einer erneuten Lasterfassung für die Überlastentscheidung vorgesehen werden.

In einer weiteren Ausführungsform des Verfahrens nimmt die Achsansteuerungseinrichtung die Lagekorrektur der Sollposition vor, bis eine Kraft oder ein Drehmoment, die jeweils von der Vorschubachse bewirkt werden, oder ein Strom oder eine Spannung einer Motorwicklung der Vorschubachse oder eine Temperatur der Vorschubachse, insbesondere einer Motorwicklung, unter einen vordefinierten Grenzwert fällt. Somit kann die Achsansteuerungseinrichtung selbstständig die Sollposition korrigieren, bis ein zulässiger Betriebszustand der Vorschubachse erreicht ist. Nach dem Erreichen des zulässigen Betriebszustands wird die Ausführung der Lagekorrektur der Sollposition beendet. Zum Erreichen einer zuverlässigen Beendigung der Korrektur wird vorzugsweise der Parameter einer Kraft oder eines Drehmomentes, die jeweils von der Vorschubachse bewirkt werden, herangezogen, weil diese die unmittelbare Wirkung einer durch die Vorschubachse bewirkten Kollision oder mechanischen Überlastung wiedergeben. Ganz besonders vorteilhaft ist das Heranziehen des Stroms einer Motorwicklung der Vorschubachse für die Beendigung der Korrektur der Sollposition, weil häufig Parameter über diesen Strom in der Achsansteuerungseinrichtung, die ihn meist selbst steuert, verfügbar sind. Bei sehr vielen Elektromotoren gibt es einen starken Zusammenhang des Stroms in der Motorwicklung mit dem erzeugten Drehmoment. Analoges gilt für die Kraft von elektromagnetischen Linearantrieben. Somit ergibt sich für den Strom als Parameter eine gute Verfügbarkeit der Information in Verbindung mit einer geeigneten und schnellen Einschätzung der Last. Eine Temperaturüberwachung der Vorschubachse ist häufig in hochwertigen Antrieben integriert, so dass Temperaturinformationen in diesem Fall leicht verfügbar sind. Es kann hilfreich sein, die langsamere Reaktion der Temperatur der Vorschubachse auf den Wegfall der Überlast bei der Korrektur zu berücksichtigen. Dies kann insbesondere durch eine verlangsamte Ausführung der Korrektur bewirkt werden. Die hier geführte Diskussion bezüglich der Parameterauswahl gilt auch für die Auswahl der Parameter, die für die Erkennung einer Überlast herangezogen werden sollen.

In einer weiteren Ausführungsform des Verfahrens ist der vordefinierte Grenzwert ein Strom durch oder eine Spannung über eine Motorwicklung der Vorschubachse oder eine Kraft oder ein Drehmoment, die von der Vorschubachse bewirkt werden, oder eine Temperatur in der Vorschubachse, insbesondere an einer Motorwicklung, wobei der Strom, die Spannung, die Kraft, das Drehmoment oder die Temperatur jeweils für den Dauerbetrieb der Vorschubachse zulässig sind. Auf diese Weise wird sichergestellt, dass sich die Vorschubachse nach der Durchführung von Korrekturschritten in einem zulässigen Betriebszustand befindet. Insbesondere ist dieser Betriebszustand auch für den Stillstand der Vorschubachse zulässig. Dies betrifft zum Beispiel den Haltebetrieb eines Schrittmotors, den erforderlichen Strom für einen zulässigen und möglicherweise gewünschten Anpresszustand von mit der Vorschubachse verbundenen Elementen oder dergleichen.

In einer weiteren Ausführungsform des Verfahrens wird eine Lagekorrektur der Sollposition durch Anwendung einer Korrekturschrittweite vorgenommen und die korrigierte Sollposition angefahren. Es wird also zunächst ein neues Bewegungsziel im Abstand der Korrekturschrittweite von der bisherigen Sollposition für die Vorschubachse gesetzt und danach angefahren. In einer weiteren Ausführungsform des Verfahrens stellt ein Benutzer die vordefinierte Schrittweite ein, so dass die Achsansteuerungseinrichtung diese zur Korrektur der Sollposition ohne Anpassung anwendet und die korrigierte Sollposition anfährt. Dadurch kann das Verfahren an die jeweiligen Gegebenheiten einer Einrichtsituation angepasst werden. Alternativ kann auch eine Werkseinstellung der Schrittweite verwendet werden. In einer weiteren, alternativen Ausführungsform wird die Schrittweite automatisch in Abhängigkeit von zum Beispiel einer Kraft oder einem Drehmoment, die von der Vorschubachse bewirkt werden, dem Strom oder der Spannung einer Motorwicklung der Vorschubachse oder deren Verhältnis oder einer Temperatur in der Vorschubachse, insbesondere einer Motorwicklung, eingestellt, vorzugsweise von der Achsansteuerungseinrichtung. Die Schrittweite wird dabei umso größer eingestellt, je größer der für Feststellung der Überlast verwendete der angegebenen Parameter ist, soweit der Parameter oder das Ergebnis in Kollisionsrichtung zunehmen. Ist Letzteres nicht der Fall, zum Beispiel bei der Verwendung eines Leitwerts einer Motorspule als Parameter, wird die Schrittweite erhöht, wenn sich der Parameter verkleinert.

In einer weiteren Ausführungsform des Verfahrens führt die Achsansteuerungseinrichtung die Lagekorrektur der Sollposition nur einmalig durch. Dies ist für eine schnelle Beseitigung der Überlast vorteilhaft. Vorzugsweise wird dabei eine Schrittweite ausgewählt, die so groß ist, dass das Anfahren der sich daraus ergebenden Sollposition mit einer hohen Wahrscheinlichkeit die Kollision oder einen unerwünschten Verformungszustand oder dergleichen beendet. Die Schrittweite hängt von der Verformbarkeit der kollidierenden Teile oder der Nachgiebigkeit bei einer Umformung oder dergleichen ab. Je weicher bzw. nachgiebiger kollidierende oder zu verformende Teile sind, desto größer wird vorzugsweise die Schrittweite gewählt. Besonders vorteilhaft ist diese Ausführungsform bei der Anwendung einer Temperatur der Vorschubachse, insbesondere von deren Motorwicklung, als Kriterium für die Auslösung einer Korrektur der Sollposition, weil auf diese Weise die lange Zeitkonstante der Temperaturverringerung bei Wegfall der Überlast nicht relevant wird.

In einer weiteren Ausführungsform des Verfahrens wird das Verfahren angewendet, während die Achsansteuerungseinrichtung die Vorschubachse in einem von einem Bediener geführten Handbetrieb ansteuert. Im handgeführten Betrieb ist die Wahrscheinlichkeit besonders hoch, dass es zu überlangem Verharren in einer Position mit gewollt hohen Kräften oder zu einer Kollision oder dergleichen kommt. Vorzugsweise wird außerdem vorgesehen, dass beim Übergang zu einem Produktionsbetrieb auf das Anfahren von Sollpositionen mit Maximalkraft bzw. Maximalstrom ohne Lagekorrektur der Sollposition bei Überlast umgeschaltet wird. Dann kann während der Produktion mit voller Motorleistung gefahren werden, während im Handbetrieb eine erhöhte Sicherheit gewahrt ist.

Besonders bevorzugt kommen die vorbeschriebenen Ausführungsformen des Verfahrens bei einer numerisch gesteuerten Vorschubachse zum Einsatz.

In einem weiteren Aspekt der vorliegenden Erfindung wird eine Achsansteuerungseinrichtung vorgeschlagen, die dazu eingerichtet ist, ein Verfahren nach einer der vorbeschriebenen Ausführungsformen durchzuführen. Insbesondere kann das Verfahren als Programm zur Ausführung in der Achsansteuerungseinrichtung gespeichert sein.

Im Folgenden wird eine Ausführungsform der vorliegenden Erfindung beispielhaft an Hand der Zeichnungen im Anhang beschrieben, in denen:

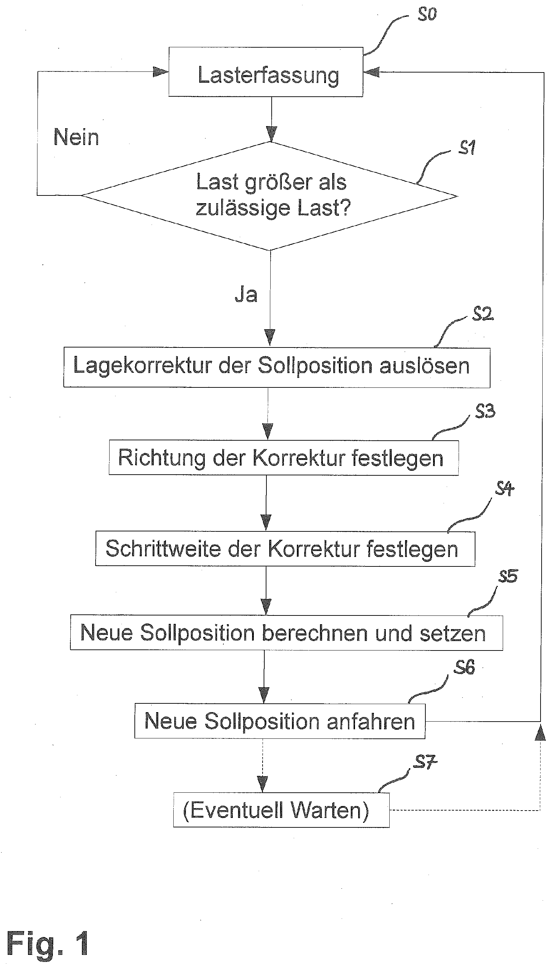

- Figur 1: ein Ablaufdiagramm des Verfahrens zur Steigerung der Ausfall sicherheit einer Vorschubachse zeigt.

Figur 1 zeigt ein Ablaufdiagramm, in dem Schritte eines Verfahrens zur Steigerung der Ausfallsicherheit einer Vorschubachse während eines Einrichtvorgangs gezeigt sind. Das Verfahren kann besonders einfach in einer Achsansteuerungseinrichtung realisiert sein. Vorzugsweise handelt es sich dabei um eine numerisch gesteuerte Achsansteuerungseinrichtung. Das Verfahren kann als ein Programm realisiert sein, das in einer solchen Achsansteuerungseinrichtung ausgeführt wird. Dieses Programm kann auch in andere Programme eingebettet sein, die ebenfalls auf der Achsansteuerungseinrichtung ausgeführt werden. Alternativ kann es als elektrische Schaltung mit geeigneter Logik ausgeführt sein.

Wenn das Verfahren ausgeführt wird, wird mit dem Schritt S0 begonnen, in dem die Last der Vorschubachse erfasst wird. Dazu kann die Last als von der Vorschubachse verursachte Kraft, als Drehmoment, als Verformungsweg oder dergleichen, gemessen werden. Alternativ oder zusätzlich kann die Last auch überwacht werden, indem Größen wie etwa ein Strom durch oder eine Spannung über eine Motorwicklung der Vorschubachse oder ein Verhältnis dieser beiden Größen oder eine Temperatur der Vorschubachse, insbesondere an einer Motorwicklung, bestimmt werden. Entsprechende Daten oder entsprechende physikalische Größen können in der Achsansteuerungseinrichtung schon verfügbar sein. Die Berechnung eines Verhältnisses solcher Daten oder Größen kann ebenfalls in der Achsansteuerungseinrichtung vorgenommen werden. Am Ende des Schritts S0 liegt ein Ergebnis der Erfassung vor, das die Last der Vorschubachse wiedergibt.

Im Schritt S1, der auf Schritt S0 folgt, wird eine Entscheidung getroffen, ob die Last, die das Erfassungsergebnis repräsentiert, größer als eine zulässige Last ist, die ebenfalls in Form eines Signals oder von Daten in der Art des Überwachungsergebnisses vorliegen, so dass ein Vergleich möglich ist. Entsprechend kann die zulässige Last als zulässiger Strom oder zulässige Spannung einer Motorwicklung der Vorschubachse, als zulässige Temperatur der Vorschubachse, insbesondere einer Motorwicklung, als zulässige Kraft, zulässiges Drehmoment oder zulässige Verformung oder dergleichen oder eine Kombination daraus relevant sein und so vorliegen, dass ein Vergleich möglich ist. Wird entschieden, dass die dem Überwachungsergebnis entsprechende Last kleiner als die zulässige Last ist, so liegt keine Überlast vor und die Kontrolle kehrt zur Lasterfassung des Schritts S0 zurück. Daraufhin wird das nächste Überwachungsergebnis ermittelt. Eine Lagekorrektur der Sollposition findet nicht statt.

Falls die bei der Überwachung ermittelte Last größer als eine zulässige Last ist, so geht das Verfahren zu dem Schritt S2 über. Dies bedeutet, dass eine Überlast vorliegt, die von einer Kollision oder einem anderweitig unerwünschten bzw. unzulässigen Betriebszustand der Vorschubachse verursacht sein kann. Schritt S2 bewirkt den Einsprung in den Verfahrensteil für die Lagekorrektur der Sollposition der Vorschubachse, um diesen Betriebszustand zu beseitigen. Darauf folgend wird in Schritt S3 die Richtung der Korrektur der Sollposition festgelegt. Die neue Sollposition wird so festgelegt, dass sie von der bisherigen Sollposition in eine Richtung entfernt liegt, die einer Richtung der Verstärkung einer Kollision oder eines unerwünschten Ereignisses entgegengerichtet ist. Im darauf folgenden Schritt S4 wird die Schrittweite für einen Korrekturschritt festgelegt. Die Schrittweite hängt vorzugsweise davon ab, wie stark die zulässige Last überschritten worden ist. Die Schrittweite ist dementsprechend bevorzugt umso größer, je stärker die Überschreitung der zulässigen Last ist. Bevorzugt wird dabei auch berücksichtigt, wie lange die Überlast schon vorliegt. Bei einem langen Vorliegen der Überlast bei hohen Überlastwerten kann von einer starken Überlast ausgegangen werden, zu deren Beseitigung eine größere Schrittweite eingestellt werden kann. Alternativ kann eine fest vorgegebene Schrittweite festgelegt sein oder werden, die groß genug ist, um mit einer sehr hohen Wahrscheinlichkeit die Kollision oder das anderweitige unerwünschte Ereignis zu beseitigen. Im Schritt S5 wird auf Schritt S4 folgend eine korrigierte, neue Sollposition berechnet und festgelegt. Bei der Berechnung werden die Richtung der Korrektur und die Schrittweite berücksichtigt. Im einfachsten Fall gestaltet sich die Berechnung der korrigierten Sollposition als Addition oder Subtraktion der Schrittweite von der bisherigen Sollposition. Auf den Schritt S5 folgt der Schritt S6, in dem die Achsansteuerungseinrichtung veranlasst wird, die neue Sollposition anzufahren. Dazu verwendet die Achsansteuerungseinrichtung die im Schritt S5 berechnete neue Sollposition und nutzt vorzugsweise in der Achsansteuerungseinrichtung vorhandene Einrichtungen, die auf die Vorgabe einer neuen Sollposition mit dem Anfahren derselben reagieren. Nachdem die Achsansteuerungseinrichtung die Positionierung ausgeführt hat, geht das Verfahren in einem besonderen Ausführungsbeispiel zu dem optionalen Schritt S7 über. In dem Schritt S7 wird gewartet, bis die sich die neue Sollposition in dem ermittelten Lastparameter ausgewirkt hat. Insbesondere bei einer Lasterfassung anhand der Temperatur der Vorschubachse, insbesondere einer von deren Motorwicklungen, kann es sinnvoll sein, abzuwarten, bis der verringerte Wärmeeintrag durch die neue Sollposition und die damit einhergehende geringere Last sich in der Temperatur ausgewirkt hat. Nachdem die Wartezeit abgelaufen ist, geht das Verfahren von dem optionalen Schritt S7 wieder zu der Lasterfassung S0 über. Wenn der optionale Schritt S7 nicht ausgeführt wird, geht das Verfahren von dem Schritt S6 unmittelbar zu der Lasterfassung S0 über. Damit beginnt der Zyklus, den das Verfahren darstellt, von neuem. Je nach der Wirkung der neuen Sollposition ist die Last nunmehr immer noch größer als die zulässige Last oder überschreitet die Grenze der zulässigen Last nicht mehr. Je nachdem wird die Lagekorrektur der Sollposition erneut ausgeführt oder das Verfahren erschöpft sich in einer weiteren Lasterfassung ohne konkrete Auswirkungen.

## Patentansprüche

1. Verfahren zur lastabhängigen Lagekorrektur der anzufahrenden Sollposition einer elektrisch angetriebenen Vorschubachse einer Produktionsmaschine mit einer Achsansteuerungseinrichtung und einer Lasterfassung (S0) während eines Einrichtvorgangs,
wobei die Achsansteuerungseinrichtung die Lagekorrektur (S2) der Sollpositionen vornimmt, wenn eine Temperatur in der Vorschubachse, ein Strom durch eine Motorwicklung der Vorschubachse, eine Spannung über eine Motorwicklung der Vorschubachse oder eine Kraft oder ein Drehmoment, die jeweils von der Vorschubachse bewirkt werden, über einen vordefinierten Grenzwert steigt, **dadurch gekennzeichnet, dass** die Achsansteuerungseinrichtung die Lagekorrektur (S2) der anzufahrenden Sollposition vornimmt, bis die Kraft oder das Drehmoment, die jeweils von der Vorschubachse bewirkt werden, oder der Strom oder die Spannung der Motorwicklung der Vorschubachse oder die Temperatur der Vorschubachse unter den vordefinierten Grenzwert fällt, indem die Lagekorrektur (S2) der anzufahrenden Sollposition durch Anwendung einer Korrekturschrittweite (S3, S4) vorgenommen wird und die korrigierte Sollposition angefahren (S5, S6) wird und eine erneute Lasterfassung (S0) vorgenommen wird und anschließend entweder eine erneute Lagekorrektur (S2) erfolgt oder eine weitere Lasterfassung (S0) erfolgt.

2. Verfahren nach Anspruch 1, **dadurch gekennzeichnet, dass** der vordefinierte Grenzwert jeweils für den Dauerbetrieb der Vorschubachse zulässig ist.

3. Verfahren nach einem der vorhergehenden Ansprüche, **dadurch gekennzeichnet, dass** ein Benutzer die Korrekturschrittweite voreinstellt.

4. Verfahren nach einem der vorangehenden Ansprüche, **dadurch gekennzeichnet, dass** die Schrittweite automatisch in Abhängigkeit von einer Kraft oder einem Drehmoment, die von der Vorschubachse bewirkt werden, dem Strom oder der Spannung einer Motorwicklung der Vorschubachse oder deren Verhältnis oder einer Temperatur in der Vorschubachse eingestellt (S4) wird.

5. Verfahren nach einem der vorangehenden Ansprüche, **dadurch gekennzeichnet, dass** die Achsansteuerungseinrichtung die Lagekorrektur (S2) der Sollposition nur einmalig durchführt.

6. Verfahren nach einem der vorangehenden Ansprüche, **dadurch gekennzeichnet, dass** das Verfahren angewendet wird, während die Achsansteuerungseinrichtung die Vorschubachse in einem von einem Bediener geführten Handbetrieb ansteuert.

7. Achsansteuerungseinrichtung, die dazu eingerichtet ist, ein Verfahren nach einem der vorangehenden Ansprüche durchzuführen.

## Claims

1. Method for the load-dependent position correction of the target position to be adopted of an electrically driven feed shaft of a production machine having a shaft control unit and load sensing (S0) during a set-up operation,
wherein the shaft control device carries out the position correction (S2) of the target positions when a temperature in the feed shaft, a current through a motor winding of the feed shaft, a voltage across a motor winding of the feed shaft or a force or a torque, each effected by the feed shaft, exceeds a predefined limit value, **characterised in that** the shaft control device carries out the position correction (S2) of the target position to be adopted until the force or torque effected by the feed shaft, or the current or voltage of the motor winding of the feed shaft or the temperature of the feed shaft falls below the predefined limit value, **in that** the position correction (S2) of the target position to be adopted is carried out by application of a correction increment (S3, S4) and the corrected target position is adopted (S5, S6) and load sensing (S0) is again carried out and then either a position correction (S2) is again carried out or a further load sensing (S0) is carried out.

2. Method according to claim 1, **characterised in that** the predefined limit value is in each case valid for the continuous operation of the feed shaft.

3. Method according to any one of the preceding claims, **characterised in that** a user presets the correction increment.

4. Method according to any one of the preceding claims, **characterised in that** the increment is set (S4) automatically in dependence on a force or torque effected by the feed shaft, on the current or voltage of a motor winding of the feed shaft or the ratio thereof, or on a temperature in the feed shaft.

5. Method according to any one of the preceding claims, **characterised in that** the shaft control device carries out the position correction (S2) of the target position only once.

6. Method according to any one of the preceding claims, **characterised in that** the method is applied while the shaft control device is controlling the feed shaft in a manual operation guided by an operator.

7. Shaft control device which is adapted to carry out a method according to any one of the preceding claims.

## Revendications

1. Procédé de correction de position en fonction de la charge de la position de consigne à atteindre d'un axe d'avancement entraîné électriquement d'une machine de production dotée d'un dispositif de commande d'axe et d'une saisie de charge (S0) pendant une opération de placement,
dans lequel le dispositif de commande d'axe effectue la correction de position (S2) des positions de consigne, lorsqu'une température dans l'axe d'avancement, un courant traversant un enroulement moteur de l'axe d'avancement, une tension aux bornes d'un enroulement moteur de l'axe d'avancement ou une force ou un couple exercés respectivement par l'axe d'avancement, dépasse une valeur limite prédéfinie, **caractérisé en ce que** le dispositif de commande d'axe effectue la correction de position (S2) de la position de consigne à atteindre, jusqu'à ce que la force ou le couple exercé respectivement par l'axe d'avancement, ou la tension ou le courant de l'enroulement moteur de l'axe d'avancement ou la température de l'axe d'avancement tombe sous la valeur limite prédéfinie, où la correction de position (S2) de la position de consigne à atteindre est effectuée par application d'une largeur de pas de correction (S3, S4) et la position de consigne corrigée est atteinte (S5, S6) et une nouvelle saisie de charge (S0) est effectuée et ensuite soit une nouvelle correction de position (S2) se produit soit une saisie de charge (S0) supplémentaire se produit.

2. Procédé selon la revendication 1, **caractérisé en ce que** la valeur limite prédéfinie est respectivement autorisée pour le fonctionnement en continu de l'axe d'avancement.

3. Procédé selon l'une des revendications ci-dessus, **caractérisé en ce qu'**un utilisateur préconfigure la largeur du pas de correction.

4. Procédé selon l'une des revendications précédentes, **caractérisé en ce que** la largeur de pas est automatiquement configurée (S4) en fonction d'une force ou d'un couple qui sont exercés par l'axe d'avancement, de la tension ou du courant d'un enroulement moteur de l'axe d'avancement ou de leur rapport ou d'une température dans l'axe d'avancement.

5. Procédé selon l'une des revendications précédentes, **caractérisé en ce que** le dispositif de commande d'axe exécute la correction de position (S2) de la position de consigne une fois seulement.

6. Procédé selon l'une des revendications précédentes, **caractérisé en ce que** le procédé est appliqué pendant que le dispositif de commande d'axe commande l'axe d'avancement dans un mode de fonctionnement manuel guidé par un opérateur.

7. Dispositif de commande d'axe, lequel est disposé de façon à exécuter un procédé selon l'une des revendications précédentes.
